# EUROPEAN PATENT APPLICATION

(11) **EP 4 485 828 A1**
(43) Date of publication of application: **01.01.2025**
(21) Application number: 22926911.3
(22) Date of filing: 29.12.2022
(51) Int. Cl.: H04L 1/18

(54) **INFORMATION PROCESSING METHOD AND APPARATUS AND READABLE STORAGE MEDIUM**

(30) Priority: 21.02.2022 CN 202210155735
(71) Applicant: Datang Mobile Communications Equipment Co., Ltd., Beijing 100085 (CN)
(72) Inventor: ZHAO, Yue, Beijing 100085 (CN); GAO, Xuejuan, Beijing 100085 (CN); SI, Qianqian, Beijing 100085 (CN)
(74) Representative: Maiwald GmbH
(86) International application number: PCT/CN2022/143583
(87) International publication number: WO 2023/155614

(57) **Abstract**

The present disclosure provides an information processing method, an information processing apparatus and a readable storage medium, which relates to the field of communication technology, so as to ensure smooth execution of repetitions or reconfiguration of transmission resources. The method includes: performing, by a user equipment, repetitions of a target TB in accordance with first DCI; receiving, by the user equipment, second DCI; determining, by the user equipment, resources for remaining repetitions of the target TB in accordance with the second DCI and a start time when the second DCI becomes effective; and performing, by the user equipment, the remaining repetitions of the target TB through the resources for the remaining repetitions of the target TB. The second DCI is DCI for scheduling an HARQ process where the target TB is located.

## Description

### CROSS-REFERENCE TO RELATED APPLICATION

This application claims a priority to Chinese patent application No. 202210155735.6 filed on February 21, 2022, which is incorporated in its entirety by reference herein.

### TECHNICAL FIELD

The present disclosure relates to the field of communication technology, in particular to an information processing method, an information processing apparatus, and a readable storage medium.

### BACKGROUND

In order to solve problems about coverage, latency and capacity of uplink transmission in a Time Division Duplex (Time Division Duplex, TDD) mode, the non-overlapping sub-band full duplex (non-overlapping sub-band full duplex) technology is to be studied, i.e., frequency domain resources are divided into multiple sub-bands not overlapping each other, and uplink and downlink frequency domain resources are located at different sub-bands, which is called as full duplex for short hereinafter.

In the related technologies, time/frequency domain transmission resources for repetitions by the user equipment are configured at once through Downlink Control Information (Downlink Control Information, DCI). However, in actual use, occurrence of repetition interruption may be caused due to unavailable resources for remaining repetitions, or a network may want to change sizes/positions of uplink/downlink resources corresponding to the remaining quantity of repetitions. For example, the above-mentioned situation may occur in a case that the network switches from a static/dynamic TDD mode to a full duplex mode, or the network switches from the full duplex mode to the static/dynamic TDD mode, or a Bandwidth Part (Bandwidth Part, BWP) is switched.

Hence, before all the repetitions are executed, how to prevent the occurrence of repetition interruption caused due to unavailable resources for remaining repetitions needs to be taken into consideration.

### SUMMARY

Embodiments of the present disclosure provide an information processing method, an information processing apparatus and a readable storage medium, so as to ensure smooth execution of repetitions or reconfiguration of transmission resources.

In a first aspect, the present disclosure provides in some embodiments an information processing method, including: performing, by a user equipment, repetitions of a target Transport Block (Transport Block, TB) in accordance with first Downlink Control Information (DCI); receiving, by the user equipment, second DCI; determining, by the user equipment, resources for remaining repetitions of the target TB in accordance with the second DCI and a start time when the second DCI becomes effective; and performing, by the user equipment, the remaining repetitions of the target TB through the resources for the remaining repetitions of the target TB. The second DCI is DCI for scheduling a Hybrid Automatic Repeat request (Hybrid Automatic Repeat request, HARQ) process where the target TB is located.

In a possible embodiment of the present disclosure, the determining, by the user equipment, the resources for the remaining repetitions of the target TB, in accordance with the second DCI and the start time when the second DCI becomes effective includes: obtaining, by the user equipment, the start time when the second DCI becomes effective; and in a case that the start time when the second DCI becomes effective is located within a repetition process of the target TB, determining, by the user equipment, the resources for the remaining repetitions of the target TB in accordance with the second DCI.

In a possible embodiment of the present disclosure, the determining, by the user equipment, the resources for the remaining repetitions of the target TB, in accordance with the second DCI and the start time when the second DCI becomes effective includes: obtaining, by the user equipment, the start time when the second DCI becomes effective; and in a case that the start time when the second DCI becomes effective is located within a repetition process of the target TB and a target field of the second DCI indicates retransmission or reconfiguration, determining, by the user equipment, the resources for the remaining repetitions of the target TB in accordance with the second DCI.

In a possible embodiment of the present disclosure, the determining, by the user equipment, the resources for the remaining repetitions of the target TB, in accordance with the second DCI and the start time when the second DCI becomes effective includes: obtaining, by the user equipment, the start time when the second DCI becomes effective; and determining, by the user equipment, the resources for the remaining repetitions of the target TB in accordance with the second DCI in a case that all the following three conditions are met: a first condition that the start time when the second DCI becomes effective is located within a repetition process of the target TB; a second condition that a target field of the second DCI is used to indicate retransmission or reconfiguration; and a third condition that, by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

In a possible embodiment of the present disclosure, the start time when the second DCI becomes effective being located within the repetition process of the target TB include that: the start time when the second DCI becomes effective is located within a start slot (slot) or symbol (symbol) for a last repetition of the target TB, or the start time when the second DCI becomes effective is located before a start slot or symbol for a last repetition of the target TB.

In a possible embodiment of the present disclosure, the target field includes a New Data Indicator (New Data Indicator, NDI) field or a reconfiguration indication field.

In a possible embodiment of the present disclosure, the start time when the second DCI becomes effective is located within a slot where a target occasion is located, or the start time when the second DCI becomes effective is located within a k^{th} slot after a slot where a target occasion is located; the target occasion is an occasion where the second DCI is received by the user equipment, and k is an integer greater than 0.

In a possible embodiment of the present disclosure, in a case that the second DCI is used for scheduling a Physical Downlink Shared Channel (Physical Downlink Shared Channel, PDSCH), a value of k is k0 indicated in the second DCI; in a case that the second DCI is used for scheduling a Physical Uplink Shared Channel (Physical Uplink Shared Channel, PUSCH), the value of k is k2 indicated in the second DCI.

In a possible embodiment of the present disclosure, the remaining repetitions of the target TB include all remaining repetitions corresponding to the remaining quantity of repetitions of the target TB, or the remaining repetitions of the target TB include repetitions corresponding to a part of the remaining quantity of repetitions of the target TB.

In a second aspect, the present disclosure provides in some embodiments an information processing method, including: transmitting, by a network device, first Downlink Control Information (DCI) to a user equipment, to schedule repetitions of a target Transport Block (TB); determining, by the network device, second DCI, where the second DCI is used to indicate the user equipment to determine resources for remaining repetitions of the target TB in accordance with the second DCI and a start time when the second DCI becomes effective; receiving or transmitting, by the network device, the target TB through the resources for the remaining repetitions determined in accordance with the second DCI.

In a possible embodiment of the present disclosure, the determining, by the network device, the second DCI includes: determining that the second DCI includes the start time when the second DCI becomes effective, and the start time when the second DCI becomes effective is located within a repetition process of the target TB.

In a possible embodiment of the present disclosure, the determining, by the network device, the second DCI further includes: determining that the second DCI includes a target field, and the target field is used to indicate retransmission or reconfiguration.

In a possible embodiment of the present disclosure, the determining, by the network device, the second DCI further includes determining that: by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

In a possible embodiment of the present disclosure, the start time when the second DCI becomes effective being located within the repetition process of the target TB include that: the start time when the second DCI becomes effective is located within a start slot or symbol for a last repetition of the target TB, or the start time when the second DCI becomes effective is located before a start slot or symbol for a last repetition of the target TB.

In a possible embodiment of the present disclosure, the target field includes an NDI field or a reconfiguration indication field.

In a possible embodiment of the present disclosure, the second DCI includes the start time when the second DCI becomes effective; the start time when the second DCI becomes effective is at a slot where a target occasion is located, or the start time when the second DCI becomes effective is at a k^{th} slot after a slot where a target occasion is located; the target occasion is an occasion where the second DCI is received by the user equipment, and k is an integer greater than 0.

In a possible embodiment of the present disclosure, in a case that the second DCI is used for scheduling a Physical Downlink Shared Channel (PDSCH), a value of k is k0 indicated in the second DCI; in a case that the second DCI is used for scheduling a Physical Uplink Shared Channel (PUSCH), the value of k is k2 indicated in the second DCI.

In a possible embodiment of the present disclosure, the remaining repetitions of the target TB include all remaining repetitions corresponding to the remaining quantity of repetitions of the target TB, or the remaining repetitions of the target TB include repetitions corresponding to a part of the remaining quantity of repetitions of the target TB.

In a third aspect, the present disclosure provides in some embodiments an information processing apparatus applied to a user equipment, including a memory, a transceiver and a processor. The memory is configured to store therein a computer program, and the transceiver is configured to receive and transmit data under control of the processor. The processor is configured to read the computer program in the memory to perform following operation: performing repetitions of a target Transport Block (TB) in accordance with first Downlink Control Information (DCI); receiving second DCI; determining resources for remaining repetitions of the target TB in accordance with the second DCI and a start time when the second DCI becomes effective; and performing the remaining repetitions of the target TB through the resources for the remaining repetitions of the target TB. The second DCI is DCI for scheduling an HARQ process where the target TB is located.

In a possible embodiment of the present disclosure, the processor is configured to read the computer program in the memory to perform following operation: obtaining the start time when the second DCI becomes effective; and in a case that the start time when the second DCI becomes effective is located within a repetition process of the target TB, determining the resources for the remaining repetitions of the target TB in accordance with the second DCI.

In a possible embodiment of the present disclosure, the processor is configured to read the computer program in the memory to perform following operation: obtaining the start time when the second DCI becomes effective; and in a case that the start time when the second DCI becomes effective is located within a repetition process of the target TB and a target field of the second DCI indicates retransmission or reconfiguration, determining the resources for the remaining repetitions of the target TB in accordance with the second DCI.

In a possible embodiment of the present disclosure, the processor is configured to read the computer program in the memory to perform following operation: obtaining the start time when the second DCI becomes effective; and determining the resources for the remaining repetitions of the target TB in accordance with the second DCI in a case that all the following three conditions are met: determining the resources for the remaining repetitions of the target TB in accordance with the second DCI in a case that all the following three conditions are met: a second condition that a target field of the second DCI is used to indicate retransmission or reconfiguration; and a third condition that, by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

In a possible embodiment of the present disclosure, the start time when the second DCI becomes effective being located within the repetition process of the target TB include that: the start time when the second DCI becomes effective is located within a start slot or symbol for a last repetition of the target TB, or the start time when the second DCI becomes effective is located before a start slot or symbol for a last repetition of the target TB.

In a possible embodiment of the present disclosure, the target field includes an NDI field or a reconfiguration indication field.

In a possible embodiment of the present disclosure, the start time when the second DCI becomes effective is located within a slot where a target occasion is located, or the start time when the second DCI becomes effective is located within a k^{th} slot after a slot where a target occasion is located; the target occasion is an occasion where the second DCI is received by the user equipment, and k is an integer greater than 0.

In a possible embodiment of the present disclosure, in a case that the second DCI is used for scheduling a Physical Downlink Shared Channel (PDSCH), a value of k is k0 indicated in the second DCI; in a case that the second DCI is used for scheduling a Physical Uplink Shared Channel (PUSCH), the value of k is k2 indicated in the second DCI.

In a possible embodiment of the present disclosure, the remaining repetitions of the target TB include all remaining repetitions corresponding to the remaining quantity of repetitions of the target TB, or the remaining repetitions of the target TB include repetitions corresponding to a part of the remaining quantity of repetitions of the target TB.

In a fourth aspect, the present disclosure provides in some embodiments an information processing apparatus applied to a network device, including a memory, a transceiver and a processor. The memory is configured to store therein a computer program, and the transceiver is configured to receive and transmit data under control of the processor. The processor is configured to read the computer program in the memory to perform following operation: transmitting first Downlink Control Information (DCI) to a user equipment, to schedule repetitions of a target Transport Block (TB); determining second DCI, where the second DCI is used to indicate the user equipment to determine resources for remaining repetitions of the target TB in accordance with the second DCI and a start time when the second DCI becomes effective; transmitting the second DCI to the user equipment; and receiving or transmitting the target TB through the resources for the remaining repetitions determined in accordance with the second DCI.

In a possible embodiment of the present disclosure, the processor is configured to read the computer program in the memory to perform following operation: determining that the second DCI includes the start time when the second DCI becomes effective, and the start time when the second DCI becomes effective is located within a repetition process of the target TB.

In a possible embodiment of the present disclosure, the processor is configured to read the computer program in the memory to perform following operation: determining that the second DCI includes a target field, and the target field is used to indicate retransmission or reconfiguration.

In a possible embodiment of the present disclosure, by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

In a possible embodiment of the present disclosure, the start time when the second DCI becomes effective being located within the repetition process of the target TB include that: the start time when the second DCI becomes effective is located within a start slot or symbol for a last repetition of the target TB, or the start time when the second DCI becomes effective is located before a start slot or symbol for a last repetition of the target TB.

In a possible embodiment of the present disclosure, the target field includes an NDI field or a reconfiguration indication field.

In a possible embodiment of the present disclosure, the second DCI includes the start time when the second DCI becomes effective; the start time when the second DCI becomes effective is at a slot where a target occasion is located, or the start time when the second DCI becomes effective is at a k^{th} slot after a slot where a target occasion is located; the target occasion is an occasion where the second DCI is received by the user equipment, and k is an integer greater than 0.

In a possible embodiment of the present disclosure, in a case that the second DCI is used for scheduling a Physical Downlink Shared Channel (PDSCH), a value of k is k0 indicated in the second DCI; in a case that the second DCI is used for scheduling a Physical Uplink Shared Channel (PUSCH), the value of k is k2 indicated in the second DCI.

In a possible embodiment of the present disclosure, the remaining repetitions of the target TB include all remaining repetitions corresponding to the remaining quantity of repetitions of the target TB, or the remaining repetitions of the target TB include repetitions corresponding to a part of the remaining quantity of repetitions of the target TB.

In a fifth aspect, the present disclosure provides in some embodiments an information processing apparatus applied to a user equipment, including: a first processing unit, configured to perform repetitions of a target Transport Block (TB) in accordance with first Downlink Control Information (DCI); a first reception unit, configured to receive second DCI; a first determination unit, configured to determine resources for remaining repetitions of the target TB in accordance with the second DCI and a start time when the second DCI becomes effective; and a second processing unit, configured to perform the remaining repetitions of the target TB through the resources for the remaining repetitions of the target TB. The second DCI is DCI for scheduling an HARQ process where the target TB is located.

In a sixth aspect, the present disclosure provides in some embodiments an information processing apparatus applied to a network device, including: a first transmission unit, configured to transmit first Downlink Control Information (DCI) to a user equipment, to schedule repetitions of a target Transport Block (TB); a first determination unit, configured to determine second DCI, where the second DCI is used to indicate the user equipment to determine resources for remaining repetitions of the target TB in accordance with the second DCI and a start time when the second DCI becomes effective; a second transmission unit, configured to transmit the second DCI to the user equipment; and a first processing unit, configured to receive or transmit the target TB through the resources for the remaining repetitions determined in accordance with the second DCI.

In a seventh aspect, the present disclosure provides in some embodiments a processor readable storage medium, having a computer program stored thereon. The computer program is executed by a processor so as to implement the above-mentioned information processing method.

According to the embodiments of the present disclosure, the UE may determine the resources for the remaining repetitions of the target TB in accordance with the second DCI, and perform the remaining repetitions of the target TB through the resources for the remaining repetitions of the target TB. As a result, based on the solutions of the embodiments of the present disclosure, the resources for the remaining repetitions of the target TB can be configured, thereby ensuring smooth execution of repetitions or ensuring reconfiguration of transmission resources.

### BRIEF DESCRIPTION OF THE DRAWINGS

Fig. 1 is a first flow chart of an information processing method according to embodiments of the present disclosure;
Fig. 2 is a second flow chart of an information processing method according to embodiments of the present disclosure;
Fig. 3 is a first schematic diagram of an information processing apparatus according to embodiments of the present disclosure;
Fig. 4 is a second schematic diagram of an information processing apparatus according to embodiments of the present disclosure;
Fig. 5 is a third schematic diagram of an information processing apparatus according to embodiments of the present disclosure; and
Fig. 6 is a fourth schematic diagram of an information processing apparatus according to embodiments of the present disclosure.

### DETAILED DESCRIPTION

The term "and/or" in the embodiments of the present disclosure describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it.

The term "multiple" in the embodiments of the present disclosure refers to two or more than two, and other words for expressing quantities are similar to it.

The technical solutions in embodiments of the present disclosure are described clearly and completely in conjunction with drawings in the embodiments of the present disclosure. Apparently, the described embodiments are merely a part of rather than all the embodiments of the present disclosure. All other embodiments obtained by a person ordinary skilled in the art based on the embodiments of the present disclosure without any creative efforts fall within the protection scope of the present disclosure.

Embodiments of the present disclosure provide an information processing method and an information processing apparatus, so as to improve transmission efficiency and reduce transmission latency.

The method and the device are based on the same application concept. Since the principles of solving problems in the method and the device are similar, reference may be made to each other for implementations of the device and the method, the repetitions of which are not provided herein.

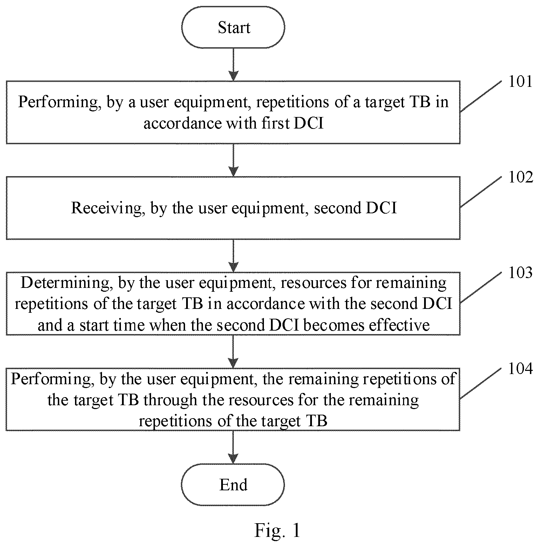

Reference is made to Fig. 1, which is a flow chart of an information processing method according to embodiments of the present disclosure. As shown in Fig. 1, the method includes the following steps.

Step 101 includes: performing, by a user equipment, repetitions of a target TB in accordance with first DCI.

The target TB may be any TB. In actual use, a network schedules, through the first DCI, new transmission or HARQ retransmission of the target TB, and may configure the quantity of repetitions of the target TB through the first DCI or Radio Resource Control (Radio Resource Control, RRC) signaling, then the user equipment may receive or transmit the target TB in accordance with the scheduling of a base station. Hence, the first DCI is DCI which schedules the new transmission or HARQ retransmission of the target TB for the first time, and it may be implemented in any DCI format in the related technologies.

Step 102 includes: receiving, by the user equipment, second DCI.

The second DCI is DCI for scheduling an HARQ process where the target TB is located. The second DCI is received in the case that not all the repetitions of the target TB have been performed. Hence, the second DCI is DCI received by the user equipment again in the procedure of performing repetitions of new transmission or HARQ retransmission of the target TB scheduled through the first DCI. The second DCI may be in a format identical to, or different from, the first DCI.

Step 103 includes: determining, by the user equipment, resources for remaining repetitions of the target TB in accordance with the second DCI and a start time when the second DCI becomes effective.

In the embodiments of the present disclosure, remaining repetitions refer to repetitions, among the configured quantity of repetitions of the target TB, which have not been performed by the user equipment by a start time when the second DCI becomes effective. The quantity of repetitions of the target TB may be configured through the first DCI, RRC signaling, or any other ways. The start time when the second DCI becomes effective may be indicated through the second DCI. The resources for the remaining repetitions refer to resources for performing the remaining repetitions.

In the embodiments of the present disclosure, the user equipment performs determination based on the start time when the second DCI becomes effective, so as to determine whether to determine the resources for the remaining repetitions of the target TB in accordance with the second DCI.

In this step, whether to determine the resources for the remaining repetitions of the target TB in accordance with the second DCI may be determined in the following ways.
(1) The user equipment obtains the start time when the second DCI becomes effective. In a case that the start time when the second DCI becomes effective is located within the repetition process of the target TB, the user equipment determines the resources for the remaining repetitions of the target TB in accordance with the second DCI.

To be specific, the start time when the second DCI becomes effective is located within a slot where a target occasion is located, or the start time when the second DCI becomes effective is located within a k^{th} slot after the slot where the target occasion is located; the target occasion is an occasion when the second DCI is received by the user equipment, and k is an integer greater than 0. k is timing information indicated in the second DCI. In a case that the second DCI is used for scheduling a PDSCH, a value of k is k0 indicated in the second DCI; in a case that the second DCI is used for scheduling a PUSCH, the value of k is k2 indicated in the second DCI.

"The start time when the second DCI becomes effective is located within the repetition process of the target TB" may represent that: the start time when the second DCI becomes effective is located within a start slot or symbol for a last repetition of the target TB, or the start time when the second DCI becomes effective is located before the start slot or symbol for the last repetition of the target TB. In other words, by the start time when the second DCI becomes effective, there still exist one or more repetitions that have not been performed by the user equipment yet.

In this situation, for the target TB: if the user equipment receives the second DCI corresponding to the HARQ process where the target TB is located in a case that the quantity N of repetitions configured by the base station have not be fully performed yet, and the start time when the second DCI becomes effective is located within the repetition process of the target TB in the HARQ process, then, the user equipment determines the resources for performing the remaining repetitions in accordance with the second DCI, and performs the remaining repetitions in accordance with the scheduling of the second DCI.

In other words, the base station issues, in the process of performing repetitions by the user equipment, the second DCI for updating resource configuration about the remaining quantity of repetitions. The user equipment performs determination based on the time position where the second DCI is received, and if there are remaining repetitions that have not been performed for the target TB in a process corresponding to the second DCI when the second DCI is received, then, the user equipment performs the remaining repetitions through the resources configured through the received second DCI.

(2) The user equipment obtains the start time when the second DCI becomes effective. In a case that the start time when the second DCI becomes effective is located within the repetition process of the target TB and a target field of the second DCI indicates retransmission or reconfiguration, the user equipment determines the resources for the remaining repetitions of the target TB in accordance with the second DCI.

The meaning of and the obtaining mode of the start time when the second DCI becomes effective are the same as those in the above embodiments. The meaning of "the start time when the second DCI becomes effective is located within the repetition process of the target TB" is the same as that in the above embodiments. The target field includes an NDI field or a reconfiguration indication field. The NDI field is used to indicate retransmission, and the reconfiguration indication field is used to indicate reconfiguration.

For example, the base station schedules, through the first DCI, new transmission or HARQ retransmission of the target TB (the new transmission or HARQ retransmission is indicated through the NDI field in the first DCI), and configures the quantity of repetitions of the target TB as N. The user equipment receives or transmits the target TB in accordance with the scheduling of the base station. For the target TB: if the user equipment receives the second DCI for the HARQ process where the target TB is located in the case that the quantity N of repetitions have not been fully performed yet, and the NDI field in the second DCI indicates retransmission, then, the user equipment determines the resources for performing the remaining repetitions in accordance with the second DCI, and performs the remaining repetitions in accordance with the scheduling of the second DCI.

(3) The user equipment obtains the start time when the second DCI becomes effective. The user equipment determines the resources for the remaining repetitions of the target TB in accordance with the second DCI in a case that all the following three conditions are met: a first condition that the start time when the second DCI becomes effective is located within a repetition process of the target TB; a second condition that a target field of the second DCI is used to indicate retransmission or reconfiguration; and a third condition that, by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

The meaning of and the obtaining mode of the start time when the second DCI becomes effective are the same as those in the above embodiments. The meaning of "the start time when the second DCI becomes effective is located within the repetition process of the target TB" is the same as that in the above embodiments. The target field includes an NDI field or a reconfiguration indication field. The first threshold and the second threshold may be set according to the practical need, which may be predefined, notified through DCI, or configured through RRC signaling.

In the case that the first and second conditions are met: for the third condition, if the quantity of repetitions that have been performed for the target TB is smaller than the first threshold or the ratio of the quantity of repetitions that have been performed for the target TB to the total quantity of repetitions of the target TB is smaller than the second threshold, the user equipment may perform the HARQ retransmission of the target TB or the new transmission of a next TB.

For example, the base station schedules, through the first DCI, the HARQ retransmission or the new transmission of the target TB (the new transmission or HARQ retransmission is indicated through the NDI field in the first DCI), and configures the quantity of repetitions of the target TB as N. The user equipment receives or transmits the target TB in accordance with the scheduling of the base station. For the target TB: if the user equipment receives the second DCI for the HARQ process where the target TB is located in the case that the quantity N of repetitions have not been fully performed yet, the NDI field in the second DCI indicates retransmission, and the ratio of the quantity of repetitions that have been performed for the target TB to the total quantity of repetitions of the target TB is greater than or equal to the second threshold, then, the user equipment determines the resources for performing the remaining repetitions in accordance with the second DCI, and performs the remaining repetitions in accordance with the scheduling of the second DCI. Otherwise, the user equipment performs the HARQ retransmission of target TB or the new transmission of a next TB.

Step 104 includes: performing, by the user equipment, the remaining repetitions of the target TB through the resources for the remaining repetitions of the target TB.

In the embodiments of the present disclosure, the remaining repetitions of the target TB include all remaining repetitions corresponding to the remaining quantity of repetitions of the target TB, or the remaining repetitions of the target TB include repetitions corresponding to a part of the remaining quantity of repetitions of the target TB.

The resources for remaining repetitions may be determined in accordance with the second DCI. To be specific, the second DCI may include time domain and/or frequency domain resource indication field, and the user equipment may determine the resources for the remaining repetitions in accordance with this field in the second DCI.

According to the embodiments of the present disclosure, the UE may determine the resources for the remaining repetitions of the target TB in accordance with the second DCI, and perform the remaining repetitions of the target TB through the resources for the remaining repetitions of the target TB. As a result, based on the solutions of the embodiments of the present disclosure, the resources for the remaining repetitions of the target TB can be configured, thereby ensuring smooth execution of repetitions or ensuring reconfiguration of transmission resources.

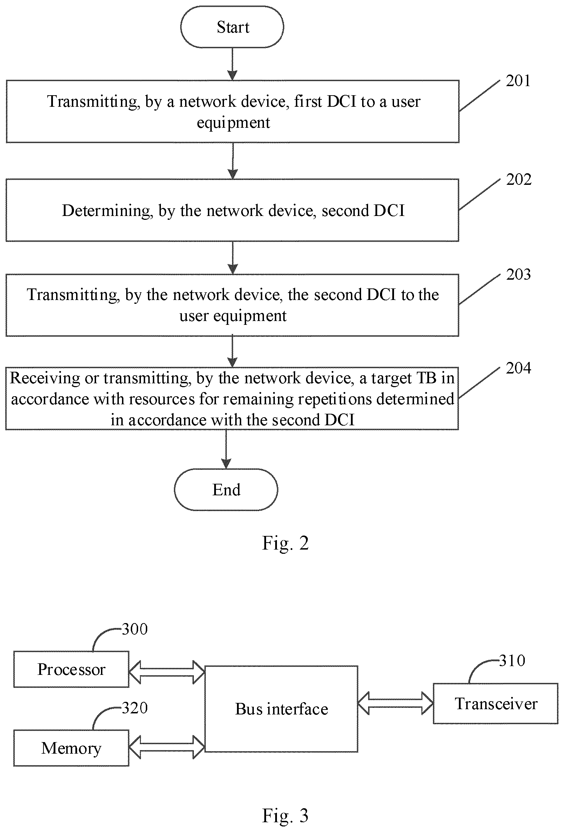

Reference is made to Fig. 2, which is a flow chart of an information processing method according to embodiments of the present disclosure. As shown in Fig. 2, the method includes the following steps.

Step 201 includes: transmitting, by a network device, first DCI to a user equipment, to schedule repetitions of a target TB.

Step 202 includes: determining, by the network device, second DCI. The second DCI is DCI for scheduling an HARQ process where the target TB is located, and the second DCI is used to indicate the user equipment to determine resources for remaining repetitions of the target TB in accordance with the second DCI and the start time when the second DCI becomes effective.

In this step, the second DCI includes the start time when the second DCI becomes effective, and the start time when the second DCI becomes effective is located within a repetition process of the target TB. The start time when the second DCI becomes effective being located within the repetition process of the target TB includes that: the start time when the second DCI becomes effective is located within a start slot or symbol for a last repetition of the target TB, or the start time when the second DCI becomes effective is located before the start slot or symbol for the last repetition of the target TB.

In a possible embodiment of the present disclosure, the second DCI further includes a target field, and the target field indicates retransmission or reconfiguration. The target field includes an NDI field or a reconfiguration indication field. The NDI field is used to indicate retransmission, and the reconfiguration indication field is used to indicate reconfiguration.

In a possible embodiment of the present disclosure, by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold. The first threshold and the second threshold may be set according to the practical need.

The second DCI includes the start time when the second DCI becomes effective, the start time when the second DCI becomes effective is at a slot where a target occasion is located or the start time when the second DCI becomes effective is at a k^{th} slot after the slot where the target occasion is located; and the target occasion is an occasion where the second DCI is received by the user equipment, and k is an integer greater than 0.

In a case that the second DCI is used for scheduling a PDSCH, a value of k is k0 indicated in the second DCI; in a case that the second DCI is used for scheduling a PUSCH, the value of k is k2 indicated in the second DCI.

In addition, the second DCI is further used to indicate resources for performing the remaining repetitions. For the meanings of the remaining repetitions and the resources for remaining repetitions, reference may be made to descriptions in the above embodiments.

The remaining repetitions of the target TB include all remaining repetitions corresponding to the remaining quantity of repetitions of the target TB, or include repetitions corresponding to a part of the remaining quantity of repetitions of the target TB.

Step 203 includes: transmitting, by the network device, second DCI to the user equipment.

Step 204 includes: receiving or transmitting, by the network device, the target TB through the resources for the remaining repetitions determined through the second DCI.

In the embodiments of the present disclosure, remaining repetitions refer to repetitions, among the configured quantity of repetitions of the target TB, which have not been performed by the user equipment by a start time when the second DCI becomes effective.

According to the embodiments of the present disclosure, the network device may indicate the UE to determine the resources for the remaining repetitions of the target TB in accordance with the second DCI, and perform the remaining repetitions of the target TB through the resources for the remaining repetitions of the target TB. As a result, based on the solutions of the embodiments of the present disclosure, the resources for the remaining repetitions of the target TB can be configured, thereby ensuring smooth execution of repetitions or ensuring reconfiguration of transmission resources.

In the embodiments of the present disclosure, with respect to DCI scheduling for a certain HARQ process: in a case that a start time when the DCI becomes effective is located within a repetition process of a target TB in the HARQ process, the user equipment determines, in accordance with the DCI, transmission resources corresponding to repetitions that have not performed by the time when the DCI becomes effective. The implementation of the information processing method will be described hereinafter in conjunction with different embodiments.

In a possible embodiment of the present disclosure, the network or base station schedules, through the first DCI, new transmission of a TB, i.e., the NDI field in the first DCI indicates new transmission, a corresponding HARQ process number (HARQ process number) field indicates 0, and the quantity of repetitions of the TB is configured as 8 through RRC signaling or the first DCI. The user equipment receives or transmits the TB repeatedly in accordance with the scheduling by the network or base station. With respect to the new transmission of the TB, if the second DCI is received by the user equipment when only 4 repetitions have been performed, the HARQ process number field in the second DCI indicates 0, and the start time when the second DCI becomes effective is located before a 5^{th} repetition, then, the user equipment performs the remaining 4 repetitions in accordance with the second DCI. Otherwise, the user equipment transmits the TB in accordance with configuration information in the first DCI.

The first DCI may have a DCI format identical to, or different from, the second DCI. The first DCI is DCI for scheduling the new transmission of the TB for the first time, and the second DCI is DCI received by the user equipment again in the process of performing repetitions of the new transmission of the TB. The first DCI and the second DCI each may be implemented in any DCI format in the related technologies.

In a case that the network or base station schedules the HARQ retransmission of the TB through the first DCI, i.e., the NDI field in the first DCI indicates retransmission, a principle of a processing mode of the user equipment is the same as that of the processing mode for the situation where the new transmission of the TB is scheduled through the first DCI.

The start time when the second DCI becomes effective is a slot where an occasion for receiving the second DCI is located, e.g., slot n, or a k^{th} slot after slot n. In a possible embodiment of the present disclosure, k is predefined, or configured in the second DCI or the first DCI (for a PDSCH, k is k0 indicated in the DCI, and for a PUSCH, k is k2 indicated in the DCI), or configured through RRC signaling.

In a possible embodiment of the present disclosure, the quantity of repetitions for which the second DCI is effective may be the whole of or part of the remaining quantity of repetitions corresponding to an occasion where the second DCI is received. For example, in a case that there are 4 remaining repetitions that have not been performed by the occasion where the second DCI is received, the quantity of repetitions for which the second DCI is effective may be the whole of the 4 remaining repetitions, or last 3 remaining repetitions. One repetition is reserved as transition period in accordance with scheduling information of the second DCI.

In a possible embodiment of the present disclosure, the network or base station schedules, through the first DCI, new transmission of a TB, i.e., the NDI field in the first DCI indicates new transmission, a corresponding HARQ process number (HARQ process number) field indicates 1, and the quantity of repetitions of the TB is configured as 8 through RRC signaling or the DCI. The user equipment receives or transmits the TB repeatedly in accordance with the scheduling by the network or base station. With respect to the new transmission of the TB, if the second DCI is received by the user equipment when only 6 repetitions have been performed, the HARQ process number field of the second DCI indicates 1, the start time when the second DCI becomes effective is located before the performing of a 7^{th} repetition, and the NDI field indicates HARQ retransmission, then, the user equipment performs the remaining 2 repetitions in accordance with scheduling of the second DCI. Otherwise, the user equipment transmits the TB in accordance with configuration information in the first DCI.

The first DCI may have a DCI format identical to, or different from, the second DCI. The first DCI is DCI for scheduling the new transmission of the TB for the first time, and the second DCI is DCI received by the user equipment again in the process of performing repetitions of the new transmission of the TB. The first DCI and the second DCI each may be implemented in any DCI format in the related technologies.

In a case that the network or base station schedules the HARQ retransmission of the TB through the first DCI, i.e., the NDI field in the first DCI indicates retransmission, a principle of a processing mode of the user equipment is the same as that of the processing mode for the situation where the new transmission of the TB is scheduled through the first DCI.

The start time when the second DCI becomes effective is a slot where an occasion for receiving the second DCI is located, e.g., slot n, or a k^{th} slot after slot n. In a possible embodiment of the present disclosure, k is predefined, or configured in the second DCI or the first DCI (for a PDSCH, k is k0 indicated in the DCI, and for a PUSCH, k is k2 indicated in the DCI), or configured through RRC signaling.

In a possible embodiment of the present disclosure, the quantity of repetitions for which the second DCI is effective may be the whole of or part of the remaining quantity of repetitions corresponding to an occasion where the second DCI is received. For example, in a case that there are 2 remaining repetitions that have not been performed by the occasion where the second DCI is received, the quantity of repetitions for which the second DCI is effective may be the whole of the 2 remaining repetitions, or last one remaining repetition. In this way, one repetition is reserved as transition period in accordance with scheduling information of the second DCI.

In a possible embodiment of the present disclosure, the network or base station schedules, through the first DCI, new transmission of a TB, i.e., the NDI field in the first DCI indicates new transmission, a corresponding HARQ process number field indicates 1, and it is configured, through RRC signaling or the DCI, that the quantity of repetitions of the TB is 8 and β is 0.5. The user equipment receives or transmits the TB repeatedly in accordance with the scheduling by the network or base station. With respect to the new transmission of the TB, if the second DCI is received by the user equipment when only one repetition has been performed, the HARQ process number field of the second DCI indicates 1, and the NDI field indicates HARQ retransmission, then: since 1/8 is smaller than 0.5, the user equipment may discard the remaining 7 repetitions and perform the HARQ retransmission in accordance with the scheduling of the second DCI; if the second DCI is received by the user equipment when only 5 repetitions have been performed, the HARQ process number field of the second DCI indicates 1, the start time when the second DCI becomes effective is located before the performing of a 6^{th} repetition, and the NDI field indicates HARQ retransmission, then: since 5/8 is greater than 0.5, the user equipment performs the remaining 3 repetitions in accordance with the scheduling of the second DCI.

The first DCI may have a DCI format identical to, or different from, the second DCI. The first DCI is DCI for scheduling the new transmission of the TB for the first time, and the second DCI is DCI received by the user equipment again in the process of performing repetitions of the new transmission of the TB. The first DCI and the second DCI each may be implemented in any DCI format in the related technologies.

In a case that the network or base station schedules the HARQ retransmission of the TB through the first DCI, i.e., the NDI field in the first DCI indicates retransmission, a principle of a processing mode of the user equipment is the same as that of the processing mode for the situation where the new transmission of the TB is scheduled through the first DCI.

The start time when the second DCI becomes effective is a slot where an occasion for receiving the second DCI is located, e.g., slot n, or a k^{th} slot after slot n. In a possible embodiment of the present disclosure, k is predefined, or configured in the second DCI or the first DCI (for a PDSCH, k is k0 indicated in the DCI, and for a PUSCH, k is k2 indicated in the DCI), or configured through RRC signaling.

In a possible embodiment of the present disclosure, the quantity of repetitions for which the second DCI is effective may be the whole of or part of the remaining quantity of repetitions corresponding to an occasion where the second DCI is received. For example, in a case that there are 2 remaining repetitions that have not been performed by the occasion where the second DCI is received, the quantity of repetitions for which the second DCI is effective may be the whole of the 2 remaining repetitions, or last one remaining repetition. In this way, one repetition is reserved as transition period in accordance with scheduling information of the second DCI.

Based on the above, in the embodiments of the present disclosure, the transmission resources corresponding to the remaining repetitions are configured in the repetition process of the TB in accordance with an existing DCI format, which can prevent repetition interruption caused by the fact that resources for remaining repetitions are unavailable due to switching of a duple mode or switching of a BWP. In addition, based on the solutions of the embodiments of the present disclosure, sizes of resources before/after the switching may be changed, in this way, abundant network resources before/after the switching can be efficiently utilized, which improves transmission efficiency and reduces transmission delay.

In addition, in some scenarios, e.g., switching of a duplex mode (switching between a TDD mode and a full duplex mode) and switching of a BWP, the network or base station may reconfigure the resources for the remaining repetitions after the switching. Hence, resources can be flexibly configured before the switching without considering whether or not the resources are available after the switching, which reduces scheduling complexity for the network or base station.

The technical solutions in the embodiments of the present disclosure may be applied to various systems, especially 5G systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5th generation mobile communication technology new radio (5th Generation Mobile Communication Technology New Radio, 5G NR) system, etc. These systems each include a terminal and a network device. The system may also include a core network part, such as an evolved packet system (Evolved Packet System, EPS), a 5G system (5G system, 5GS), etc.

The terminal involved in the embodiments of the present disclosure may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal may communicate with one or more core networks (Core Network, CN) through a radio access network (Radio Access Network, RAN). The wireless terminal may be a mobile terminal, such as a mobile phone (or referred to as a "cellular" phone) or a computer with a mobile terminal, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device), which is not limited in the embodiments of the present disclosure.

The network device involved in the embodiments of the present disclosure may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of the present disclosure may be a network device (Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB), a relay node (relay node), a femto (femto), a pico (pico), etc., which is not limited in the embodiments of the present disclosure. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2-dimension MIMO (2-dimension MIMO, 2D-MIMO), 3-dimension MIMO (3-dimension MIMO, 3D-MIMO), full dimension MIMO (full dimension MIMO, FD-MIMO), or massive MIMO (massive-MIMO), or may be diversity transmission, or precoding transmission, or beamforming transmission, etc.

The present disclosure further provides in some embodiments an information processing apparatus applied to a network device, which, as shown in Fig. 3, includes: a processor 300 configured to read a program in a memory 320 to perform following operation: transmitting first Downlink Control Information (DCI) to a user equipment, to schedule repetitions of a target Transport Block (TB); determining second DCI, where the second DCI is DCI for scheduling an HARQ process where the target TB is located, and is used to indicate the user equipment to determine resources for remaining repetitions of the target TB in accordance with the second DCI and a start time when the second DCI becomes effective; transmitting the second DCI to the user equipment; and receiving or transmitting the target TB through the resources for the remaining repetitions determined in accordance with the second DCI; and a transceiver 310 configured to receive and transmit data under control of the processor 300.

In Fig. 3, a bus architecture may include any quantity of interconnected buses and bridges. Various circuits including one or more processors represented by the processor 300 and a memory represented by the memory 320 are linked. The bus architecture may further link various other circuits together, such as a periphery component, a voltage stabilizer and a power management circuit, which are known in the art and are not further described herein. A bus interface provides an interface. The transceiver 310 may be multiple elements, i.e., including a transmitter and a receiver, providing a unit for communicating with various other devices on transmission media. The processor 300 is in charge of managing the bus architecture and common processes. The memory 320 may store data used by the processor 300 in performing operations.

The processor 310 may be a central processing unit (Central Processing Unit, CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor may adopt a multi-core architecture.

The processor 300 is in charge of managing the bus architecture and common processes. The memory 320 may store data used by the processor 300 in performing operations.

In a possible embodiment of the present disclosure, the processor 300 is configured to read the computer program in the memory to perform following operation: determining that the second DCI includes the start time when the second DCI becomes effective, and the start time when the second DCI becomes effective is located within a repetition process of the target TB.

In a possible embodiment of the present disclosure, the processor 300 is configured to read the computer program in the memory to perform following operation: determining that the second DCI includes a target field, and the target field is used to indicate retransmission or reconfiguration.

In a possible embodiment of the present disclosure, the processor 300 is configured to read the computer program in the memory to perform following operation: determining that, by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

In a possible embodiment of the present disclosure, the start time when the second DCI becomes effective being located within the repetition process of the target TB include that: the start time when the second DCI becomes effective is located within a start slot or symbol for a last repetition of the target TB, or the start time when the second DCI becomes effective is located before a start slot or symbol for a last repetition of the target TB.

In a possible embodiment of the present disclosure, the target field includes an NDI field or a reconfiguration indication field.

In a possible embodiment of the present disclosure, the remaining repetitions of the target TB include all remaining repetitions corresponding to the remaining quantity of repetitions of the target TB, or the remaining repetitions of the target TB include repetitions corresponding to a part of the remaining quantity of repetitions of the target TB.

In a possible embodiment of the present disclosure, the second DCI includes the start time when the second DCI becomes effective; the start time when the second DCI becomes effective is at a slot where a target occasion is located, or the start time when the second DCI becomes effective is at a k^{th} slot after a slot where a target occasion is located; the target occasion is an occasion where the second DCI is received by the user equipment, and k is an integer greater than 0.

In a possible embodiment of the present disclosure, in a case that the second DCI is used for scheduling a Physical Downlink Shared Channel (PDSCH), a value of k is k0 indicated in the second DCI; in a case that the second DCI is used for scheduling a Physical Uplink Shared Channel (PUSCH), the value of k is k2 indicated in the second DCI.

In a possible embodiment of the present disclosure, the remaining repetitions of the target TB include all remaining repetitions corresponding to the remaining quantity of repetitions of the target TB, or the remaining repetitions of the target TB include repetitions corresponding to a part of the remaining quantity of repetitions of the target TB.

It should be noted that the apparatus according to the embodiments of the present disclosure can realize all the method steps achieved by the network device, and the same technical effects can be realized. The same parts of the present embodiments as the method embodiments, and the beneficial effects, are not repeated herein.

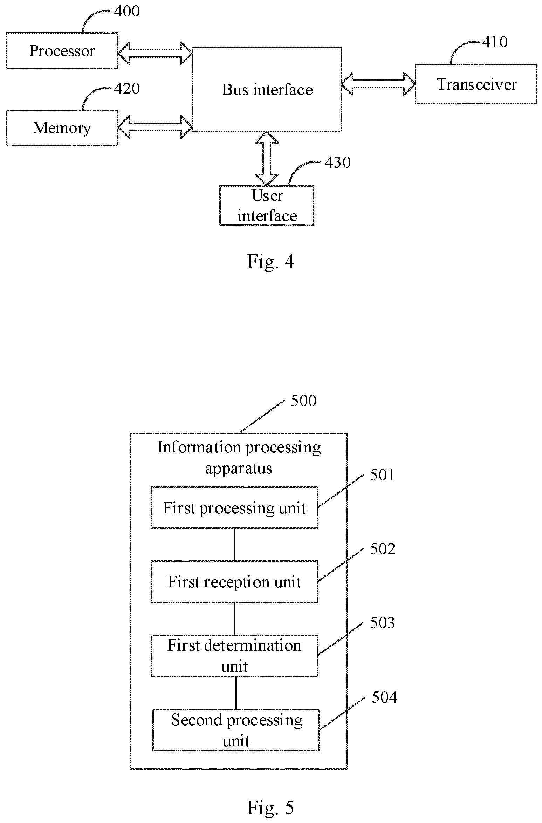

The present disclosure further provides in some embodiments an information processing apparatus applied to a user equipment which, as shown in Fig. 4, includes: a processor 400 configured to read a program in a memory 420 to perform following operation: performing repetitions of a target Transport Block (TB) in accordance with first Downlink Control Information (DCI); receiving second DCI; determining resources for remaining repetitions of the target TB in accordance with the second DCI and a start time when the second DCI becomes effective; and performing the remaining repetitions of the target TB through the resources for the remaining repetitions of the target TB, where the second DCI is DCI for scheduling an HARQ process where the target TB is located; and a transceiver 410 configured to receive and transmit data under the control of the processor 400.

In Fig. 4, a bus architecture may include any quantity of interconnected buses and bridges. Various circuits including one or more processors represented by the processor 400 and a memory represented by the memory 420 are linked. The bus architecture may further link various other circuits together, such as a periphery component, a voltage stabilizer and a power management circuit, which are known in the art and are not further described herein. A bus interface provides an interface. The transceiver 410 may be multiple elements, i.e., including a transmitter and a receiver, providing a unit for communicating with various other devices on transmission media. For different user equipments, the user interface 430 may be an interface capable of connecting externally and internally with the required equipment. The connected equipment includes but not limited to a keypad, a display, a speaker, a microphone, a joystick, etc.

The processor 400 is in charge of managing the bus architecture and common processes. The memory 420 may store data used by the processor 400 in performing operations.

The processor 400 may be a central processing device (CPU), a specific integrated circuit (Application Specific Integrated Circuit, ASIC), a field-programmable gate array (Field-Programmable Gate Array, FPGA), or a complex programmable logic device (Complex Programmable Logic Device, CPLD), or the processor may adopt a multi-core architecture.

The processor is configured to execute any of the methods in the embodiments of the present disclosure according to obtained executable instructions by calling the computer program stored in the memory. The processor and the memory may be physically arranged separately.

In a possible embodiment of the present disclosure, the processor 400 is configured to read the computer program in the memory to perform following operation: obtaining the start time when the second DCI becomes effective; and in a case that the start time when the second DCI becomes effective is located within a repetition process of the target TB, determining the resources for the remaining repetitions of the target TB in accordance with the second DCI.

In a possible embodiment of the present disclosure, the processor 400 is configured to read the computer program in the memory to perform following operation: obtaining the start time when the second DCI becomes effective; and in a case that the start time when the second DCI becomes effective is located within a repetition process of the target TB and a target field of the second DCI indicates retransmission or reconfiguration, determining the resources for the remaining repetitions of the target TB in accordance with the second DCI.

In a possible embodiment of the present disclosure, the processor 400 is configured to read the computer program in the memory to perform following operation: obtaining the start time when the second DCI becomes effective; and determining the resources for the remaining repetitions of the target TB in accordance with the second DCI in a case that all the following three conditions are met: a first condition that the start time when the second DCI becomes effective is located within a repetition process of the target TB; a second condition that a target field of the second DCI is used to indicate retransmission or reconfiguration; and a third condition that, by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

In a possible embodiment of the present disclosure, the start time when the second DCI becomes effective being located within the repetition process of the target TB include that: the start time when the second DCI becomes effective is located within a start slot or symbol for a last repetition of the target TB, or the start time when the second DCI becomes effective is located before a start slot or symbol for a last repetition of the target TB.

In a possible embodiment of the present disclosure, the target field includes an NDI field or a reconfiguration indication field.

In a possible embodiment of the present disclosure, the start time when the second DCI becomes effective is located within a slot where a target occasion is located, or the start time when the second DCI becomes effective is located within a k^{th} slot after a slot where a target occasion is located; the target occasion is an occasion where the second DCI is received by the user equipment, and k is an integer greater than 0.

In a possible embodiment of the present disclosure, in a case that the second DCI is used for scheduling a Physical Downlink Shared Channel (PDSCH), a value of k is k0 indicated in the second DCI; in a case that the second DCI is used for scheduling a Physical Uplink Shared Channel (PUSCH), the value of k is k2 indicated in the second DCI.

In a possible embodiment of the present disclosure, the remaining repetitions of the target TB include all remaining repetitions corresponding to the remaining quantity of repetitions of the target TB, or the remaining repetitions of the target TB include repetitions corresponding to a part of the remaining quantity of repetitions of the target TB.

It should be noted that the apparatus according to the embodiments of the present disclosure can realize all the method steps achieved by the user equipment, and the same technical effects can be realized. The same parts of the present embodiments as the method embodiments, and the beneficial effects, are not repeated herein.

As shown in Fig. 5, the present disclosure provides in some embodiments an information processing apparatus applied to a user equipment, which includes: a first processing unit 501, configured to perform repetitions of a target Transport Block (TB) in accordance with first Downlink Control Information (DCI); a first reception unit 502, configured to receive second DCI; a first determination unit 503, configured to determine resources for remaining repetitions of the target TB in accordance with the second DCI and a start time when the second DCI becomes effective; and a second processing unit 504, configured to perform the remaining repetitions of the target TB through the resources for the remaining repetitions of the target TB. The second DCI is DCI for scheduling an HARQ process where the target TB is located.

In a possible embodiment of the present disclosure, the first determination unit includes: a first obtaining sub-unit configured to: obtain the start time when the second DCI becomes effective; and a first determination sub-unit configured to: in a case that the start time when the second DCI becomes effective is located within a repetition process of the target TB, determine the resources for the remaining repetitions of the target TB in accordance with the second DCI.

In a possible embodiment of the present disclosure, the first determination unit includes: a first obtaining sub-unit configured to: obtain the start time when the second DCI becomes effective; and a second determination sub-unit configured to: in a case that the start time when the second DCI becomes effective is located within a repetition process of the target TB and a target field of the second DCI indicates retransmission or reconfiguration, determine the resources for the remaining repetitions of the target TB in accordance with the second DCI.

In a possible embodiment of the present disclosure, the first determination unit includes: a third obtaining sub-unit configured to: obtain the start time when the second DCI becomes effective; and a third determination sub-unit configured to: determine the resources for the remaining repetitions of the target TB in accordance with the second DCI in a case that all the following three conditions are met: a first condition that the start time when the second DCI becomes effective is located within a repetition process of the target TB; a second condition that a target field of the second DCI is used to indicate retransmission or reconfiguration; and a third condition that, by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

In a possible embodiment of the present disclosure, the start time when the second DCI becomes effective being located within the repetition process of the target TB include that: the start time when the second DCI becomes effective is located within a start slot or symbol for a last repetition of the target TB, or the start time when the second DCI becomes effective is located before a start slot or symbol for a last repetition of the target TB.

In a possible embodiment of the present disclosure, the target field includes an NDI field or a reconfiguration indication field.

In a possible embodiment of the present disclosure, the start time when the second DCI becomes effective is located within a slot where a target occasion is located, or the start time when the second DCI becomes effective is located within a k^{th} slot after a slot where a target occasion is located; the target occasion is an occasion where the second DCI is received by the user equipment, and k is an integer greater than 0.

In a possible embodiment of the present disclosure, in a case that the second DCI is used for scheduling a Physical Downlink Shared Channel (PDSCH), a value of k is k0 indicated in the second DCI; in a case that the second DCI is used for scheduling a Physical Uplink Shared Channel (PUSCH), the value of k is k2 indicated in the second DCI.

In a possible embodiment of the present disclosure, the remaining repetitions of the target TB include all remaining repetitions corresponding to the remaining quantity of repetitions of the target TB, or the remaining repetitions of the target TB include repetitions corresponding to a part of the remaining quantity of repetitions of the target TB.

It should be noted that the apparatus according to the embodiments of the present disclosure can realize all the method steps achieved by the user equipment, and the same technical effects can be realized. The same parts of the present embodiments as the method embodiments, and the beneficial effects, are not repeated herein.

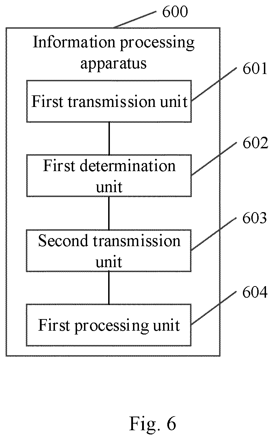

As shown in Fig. 6, the present disclosure further provides in some embodiments an information processing apparatus applied to a network device, which includes: a first transmission unit 601, configured to transmit first Downlink Control Information (DCI) to a user equipment, to schedule repetitions of a target Transport Block (TB); a first determination unit 602, configured to determine second DCI, where the second DCI is DCI for scheduling an HARQ process where the target TB is located, and is used to indicate the user equipment to determine resources for remaining repetitions of the target TB in accordance with the second DCI and a start time when the second DCI becomes effective; a second transmission unit 603, configured to transmit the second DCI to the user equipment; and a first processing unit 604, configured to receive or transmit the target TB through the resources for the remaining repetitions determined in accordance with the second DCI.

In a possible embodiment of the present disclosure, the first determination unit is configured to determine that the second DCI includes the start time when the second DCI becomes effective, and the start time when the second DCI becomes effective is located within a repetition process of the target TB.

In a possible embodiment of the present disclosure, the first determination unit is configured to determine that the second DCI includes a target field, and the target field is used to indicate retransmission or reconfiguration.

In a possible embodiment of the present disclosure, the first determination unit is configured to determine that: by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

In a possible embodiment of the present disclosure, the start time when the second DCI becomes effective being located within the repetition process of the target TB include that: the start time when the second DCI becomes effective is located within a start slot or symbol for a last repetition of the target TB, or the start time when the second DCI becomes effective is located before a start slot or symbol for a last repetition of the target TB.

In a possible embodiment of the present disclosure, the target field includes an NDI field or a reconfiguration indication field.

In a possible embodiment of the present disclosure, the second DCI includes the start time when the second DCI becomes effective; the start time when the second DCI becomes effective is at a slot where a target occasion is located, or the start time when the second DCI becomes effective is at a k^{th} slot after a slot where a target occasion is located; the target occasion is an occasion where the second DCI is received by the user equipment, and k is an integer greater than 0.

In a possible embodiment of the present disclosure, in a case that the second DCI is used for scheduling a Physical Downlink Shared Channel (PDSCH), a value of k is k0 indicated in the second DCI; in a case that the second DCI is used for scheduling a Physical Uplink Shared Channel (PUSCH), the value of k is k2 indicated in the second DCI.

In a possible embodiment of the present disclosure, the remaining repetitions of the target TB include all remaining repetitions corresponding to the remaining quantity of repetitions of the target TB, or the remaining repetitions of the target TB include repetitions corresponding to a part of the remaining quantity of repetitions of the target TB.

It should be noted that the apparatus according to the embodiments of the present disclosure can realize all the method steps achieved by the network device, and the same technical effects can be realized. The same parts of the present embodiments as the method embodiments, and the beneficial effects, are not repeated herein.

It should be noted that the division of units in the embodiments of the present disclosure is schematic and only serves as a division of logical functions, and there may be other division methods in actual implementations. In addition, in the embodiments of the present disclosure, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present disclosure, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present disclosure. The storage medium includes a USB flash disk, a mobile hard disk, a read-only memory (Read-Only Memory, ROM), a random access memory (Random Access Memory, RAM), a magnetic disk, an optical disk, or other medium which can store program code.

Embodiments of the present disclosure also provide a processor readable storage medium, where the readable storage medium stores a program, and the program, when being execute by a processor, performs various processes in the embodiments of the above-mentioned information processing method, and same technical effects can be achieved, the repetitions of which are not provided herein. The readable storage medium may be any available medium or data storage device that the processor may access, including but not limited to a magnetic memory (such as a floppy disk, a hard disk, a magnetic tape, a magneto-optical disk (Magnetic-Optical disc, MO), etc.), an optical memory (such as a Compact Disc (Compact Disc, CD), a Digital Versatile Disc (Digital Versatile Disc, DVD), a Blue-ray Disc (Blue-ray Disc, BD), a (High-definition Versatile Disc (High-definition Versatile Disc, HVD), etc.), or a semiconductor memory (such as a ROM, an Electrically Programmable Read-Only Memory (Electrically Programmable Read-Only Memory, EPROM), an Electrically Erasable Programmable Read-Only Memory (Electrically Erasable Programmable Read-Only Memory, EEPROM), a non-volatile memory (NAND FLASH), a solid state drive (Solid State Drive, SSD), etc.).

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determining module may be a separate processing element, or may be integrated into a certain chip of the above device, or, may be stored in the memory of the above device in the form of program code, and a certain processing element of the above device may call and execute the functions of the determining module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of the present disclosure are used to distinguish similar objects and are not necessarily used to describe a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A and B" in this specification and claims should be understood as "A alone, B alone, or both A and B".

It should be noted that the terms such as "having" and "including" or any other variants thereof, are intended to cover a non-exclusive inclusion, such that a process, method, article, or apparatus that includes a list of elements not only include those elements but may also include other elements that are not expressly listed or that are inherent to such process, method, article, or apparatus. Without more constraints, an element defined by the phrase "including a ..." does not preclude the existence of additional same elements in the process, method, article, or apparatus that includes the element.

From the above description of the embodiments, it will be clear to a person skilled in the art that the method of the above embodiments may be implemented by means of software plus common hardware platform as needed, or by means of hardware. With such an understanding, the essence the technical solutions of the present disclosure or the part contributing to the related technologies may be embodied in the form of a software product, and the computer software product is stored in a storage medium (e.g. ROM/RAM, magnetic disk, optical disk) including instructions to enable a terminal (which may be a cell phone, a computer, a server, an air conditioner or a network device) to perform the methods described in the various embodiments of the present disclosure.

The embodiments of the present disclosure are described in the above with reference to the drawings, and the present disclosure is not limited to the above specific implementations. The above specific implementations are illustrative rather than restrictive. Various forms can be made by those of ordinary skill in the art under the inspiration of the present disclosure, without departing from the purpose of the present disclosure and the protection scope of the claims, all of which fall within the protection of the present disclosure.

## Claims

1. An information processing method, comprising:
performing, by a user equipment, repetitions of a target Transport Block (TB) in accordance with first Downlink Control Information (DCI);
receiving, by the user equipment, second DCI;
determining, by the user equipment, resources for remaining repetitions of the target TB in accordance with the second DCI and a start time when the second DCI becomes effective; and
performing, by the user equipment, the remaining repetitions of the target TB through the resources for the remaining repetitions of the target TB.

2. The information processing method according to claim 1, wherein the determining, by the user equipment, the resources for the remaining repetitions of the target TB, in accordance with the second DCI and the start time when the second DCI becomes effective comprises:
obtaining, by the user equipment, the start time when the second DCI becomes effective; and
in a case that the start time when the second DCI becomes effective is located within a repetition process of the target TB, determining, by the user equipment, the resources for the remaining repetitions of the target TB in accordance with the second DCI.

3. The information processing method according to claim 1, wherein the determining, by the user equipment, the resources for the remaining repetitions of the target TB, in accordance with the second DCI and the start time when the second DCI becomes effective comprises:
obtaining, by the user equipment, the start time when the second DCI becomes effective; and
in a case that the start time when the second DCI becomes effective is located within a repetition process of the target TB and a target field of the second DCI indicates retransmission or reconfiguration, determining, by the user equipment, the resources for the remaining repetitions of the target TB in accordance with the second DCI.

4. The information processing method according to claim 1, wherein the determining, by the user equipment, the resources for the remaining repetitions of the target TB, in accordance with the second DCI and the start time when the second DCI becomes effective comprises:
obtaining, by the user equipment, the start time when the second DCI becomes effective; and
determining, by the user equipment, the resources for the remaining repetitions of the target TB in accordance with the second DCI in a case that all the following three conditions are met:
a first condition that the start time when the second DCI becomes effective is located within a repetition process of the target TB;
a second condition that a target field of the second DCI is used to indicate retransmission or reconfiguration; and
a third condition that, by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

5. The information processing method according to any one of claims 2 to 4, wherein the start time when the second DCI becomes effective being located within the repetition process of the target TB comprise that: the start time when the second DCI becomes effective is located within a start slot or symbol for a last repetition of the target TB, or the start time when the second DCI becomes effective is located before a start slot or symbol for a last repetition of the target TB.

6. The information processing method according to claim 3 or claim 4, wherein the target field comprises a New Data Indicator (NDI) field or a reconfiguration indication field.

7. The information processing method according to any one of claims 2 to 4, wherein the start time when the second DCI becomes effective is located within a slot where a target occasion is located, or the start time when the second DCI becomes effective is located within a k^{th} slot after a slot where a target occasion is located; wherein the target occasion is an occasion where the second DCI is received by the user equipment, and k is an integer greater than 0.

8. The information processing method according to claim 7, wherein in a case that the second DCI is used for scheduling a Physical Downlink Shared Channel (PDSCH), a value of k is k0 indicated in the second DCI; in a case that the second DCI is used for scheduling a Physical Uplink Shared Channel (PUSCH), the value of k is k2 indicated in the second DCI.

9. The information processing method according to any one of claims 2 to 4, wherein the remaining repetitions of the target TB comprise all remaining repetitions corresponding to the remaining quantity of repetitions of the target TB, or the remaining repetitions of the target TB comprise repetitions corresponding to a part of the remaining quantity of repetitions of the target TB.

10. An information processing method, comprising:
transmitting, by a network device, first Downlink Control Information (DCI) to a user equipment, to schedule repetitions of a target Transport Block (TB);
determining, by the network device, second DCI, wherein the second DCI is used to indicate the user equipment to determine resources for remaining repetitions of the target TB in accordance with the second DCI and a start time when the second DCI becomes effective;
transmitting, by the network device, the second DCI to the user equipment; and
receiving or transmitting, by the network device, the target TB through the resources for the remaining repetitions determined in accordance with the second DCI.

11. The information processing method according to claim 10, wherein the determining, by the network device, the second DCI comprises: determining that the second DCI comprises the start time when the second DCI becomes effective, and the start time when the second DCI becomes effective is located within a repetition process of the target TB.

12. The information processing method according to claim 11, wherein the determining, by the network device, the second DCI further comprises: determining that the second DCI comprises a target field, and the target field is used to indicate retransmission or reconfiguration.

13. The information processing method according to claim 12, wherein the determining, by the network device, the second DCI further comprises determining that: by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

14. The information processing method according to any one of claims 11 to 13, wherein the start time when the second DCI becomes effective being located within the repetition process of the target TB comprise that: the start time when the second DCI becomes effective is located within a start slot or symbol for a last repetition of the target TB, or the start time when the second DCI becomes effective is located before a start slot or symbol for a last repetition of the target TB.

15. The information processing method according to claim 12 or claim 13, wherein the target field comprises a New Data Indicator (NDI) field or a reconfiguration indication field.

16. The information processing method according to claim 10, wherein the second DCI comprises the start time when the second DCI becomes effective; wherein the start time when the second DCI becomes effective is at a slot where a target occasion is located, or the start time when the second DCI becomes effective is at a k^{th} slot after a slot where a target occasion is located; wherein the target occasion is an occasion where the second DCI is received by the user equipment, and k is an integer greater than 0.

17. The information processing method according to claim 16, wherein in a case that the second DCI is used for scheduling a Physical Downlink Shared Channel (PDSCH), a value of k is k0 indicated in the second DCI; in a case that the second DCI is used for scheduling a Physical Uplink Shared Channel (PUSCH), the value of k is k2 indicated in the second DCI.

18. The information processing method according to any one of claims 10 to 13, wherein the remaining repetitions of the target TB comprise all remaining repetitions corresponding to the remaining quantity of repetitions of the target TB, or the remaining repetitions of the target TB comprise repetitions corresponding to a part of the remaining quantity of repetitions of the target TB.

19. An information processing apparatus applied to a user equipment, comprising a memory, a transceiver and a processor,
wherein the memory is configured to store therein a computer program, and the transceiver is configured to receive and transmit data under control of the processor,
wherein the processor is configured to read the computer program in the memory to perform following operation:
performing repetitions of a target Transport Block (TB) in accordance with first Downlink Control Information (DCI);
receiving second DCI;
determining resources for remaining repetitions of the target TB in accordance with the second DCI and a start time when the second DCI becomes effective; and
performing the remaining repetitions of the target TB through the resources for the remaining repetitions of the target TB.

20. The information processing apparatus according to claim 19, wherein the processor is configured to read the computer program in the memory to perform following operation:
obtaining the start time when the second DCI becomes effective; and
in a case that the start time when the second DCI becomes effective is located within a repetition process of the target TB, determining the resources for the remaining repetitions of the target TB in accordance with the second DCI.

21. The information processing apparatus according to claim 19, wherein the processor is configured to read the computer program in the memory to perform following operation:
obtaining the start time when the second DCI becomes effective; and
in a case that the start time when the second DCI becomes effective is located within a repetition process of the target TB and a target field of the second DCI indicates retransmission or reconfiguration, determining the resources for the remaining repetitions of the target TB in accordance with the second DCI.

22. The information processing apparatus according to claim 19, wherein the processor is configured to read the computer program in the memory to perform following operation:
obtaining the start time when the second DCI becomes effective; and
determining the resources for the remaining repetitions of the target TB in accordance with the second DCI in a case that all the following three conditions are met:
a first condition that the start time when the second DCI becomes effective is located within a repetition process of the target TB;
a second condition that a target field of the second DCI is used to indicate retransmission or reconfiguration; and
a third condition that, by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

23. The information processing apparatus according to any one of claims 20 to 22, wherein the start time when the second DCI becomes effective being located within the repetition process of the target TB comprise that: the start time when the second DCI becomes effective is located within a start slot or symbol for a last repetition of the target TB, or the start time when the second DCI becomes effective is located before a start slot or symbol for a last repetition of the target TB.

24. The information processing apparatus according to claim 21 or claim 22, wherein the target field comprises a New Data Indicator (NDI) field or a reconfiguration indication field.

25. The information processing apparatus according to claim 20 or claim 21, wherein the start time when the second DCI becomes effective is located within a slot where a target occasion is located, or the start time when the second DCI becomes effective is located within a k^{th} slot after a slot where a target occasion is located; wherein the target occasion is an occasion where the second DCI is received by the user equipment, and k is an integer greater than 0.

26. The information processing apparatus according to claim 25, wherein in a case that the second DCI is used for scheduling a Physical Downlink Shared Channel (PDSCH), a value of k is k0 indicated in the second DCI; in a case that the second DCI is used for scheduling a Physical Uplink Shared Channel (PUSCH), the value of k is k2 indicated in the second DCI.

27. The information processing apparatus according to any one of claims 19 to 22, wherein the remaining repetitions of the target TB comprise all remaining repetitions corresponding to the remaining quantity of repetitions of the target TB, or the remaining repetitions of the target TB comprise repetitions corresponding to a part of the remaining quantity of repetitions of the target TB.

28. An information processing apparatus applied to a network device, comprising a memory, a transceiver and a processor,
wherein the memory is configured to store therein a computer program, and the transceiver is configured to receive and transmit data under control of the processor,
wherein the processor is configured to read the computer program in the memory to perform following operation:
transmitting first Downlink Control Information (DCI) to a user equipment, to schedule repetitions of a target Transport Block (TB);
determining second DCI, wherein the second DCI is used to indicate the user equipment to determine resources for remaining repetitions of the target TB in accordance with the second DCI and a start time when the second DCI becomes effective;
transmitting the second DCI to the user equipment; and
receiving or transmitting the target TB through the resources for the remaining repetitions determined in accordance with the second DCI.

29. The information processing apparatus according to claim 28, wherein the processor is configured to read the computer program in the memory to perform following operation: determining that the second DCI comprises the start time when the second DCI becomes effective, and the start time when the second DCI becomes effective is located within a repetition process of the target TB.

30. The information processing apparatus according to claim 29, wherein the processor is configured to read the computer program in the memory to perform following operation: determining that the second DCI comprises a target field, and the target field is used to indicate retransmission or reconfiguration.

31. The information processing apparatus according to claim 30, wherein by the start time when the second DCI becomes effective, the quantity of repetitions that have been performed for the target TB is greater than or equal to a first threshold or a ratio of the quantity of repetitions that have been performed for the target TB to the total quantity of repetitions of the target TB is greater than or equal to a second threshold.

32. The information processing apparatus according to any one of claims 29 to 31, wherein the start time when the second DCI becomes effective being located within the repetition process of the target TB comprise that: the start time when the second DCI becomes effective is located within a start slot or symbol for a last repetition of the target TB, or the start time when the second DCI becomes effective is located before a start slot or symbol for a last repetition of the target TB.

33. The information processing apparatus according to claim 30 or claim 31, wherein the target field comprises a New Data Indicator (NDI) field or a reconfiguration indication field.

34. The information processing apparatus according to claim 28, wherein the second DCI comprises the start time when the second DCI becomes effective; wherein the start time when the second DCI becomes effective is at a slot where a target occasion is located, or the start time when the second DCI becomes effective is at a k^{th} slot after a slot where a target occasion is located; wherein the target occasion is an occasion where the second DCI is received by the user equipment, and k is an integer greater than 0.

35. The information processing apparatus according to claim 34, wherein in a case that the second DCI is used for scheduling a Physical Downlink Shared Channel (PDSCH), a value of k is k0 indicated in the second DCI; in a case that the second DCI is used for scheduling a Physical Uplink Shared Channel (PUSCH), the value of k is k2 indicated in the second DCI.

36. The information processing apparatus according to any one of claims 28 to 31, wherein the remaining repetitions of the target TB comprise all remaining repetitions corresponding to the remaining quantity of repetitions of the target TB, or the remaining repetitions of the target TB comprise repetitions corresponding to a part of the remaining quantity of repetitions of the target TB.

37. An information processing apparatus applied to a user equipment, comprising:
a first processing unit, configured to perform repetitions of a target Transport Block (TB) in accordance with first Downlink Control Information (DCI);
a first reception unit, configured to receive second DCI;
a first determination unit, configured to determine resources for remaining repetitions of the target TB in accordance with the second DCI and a start time when the second DCI becomes effective; and
a second processing unit, configured to perform the remaining repetitions of the target TB through the resources for the remaining repetitions of the target TB.

38. An information processing apparatus applied to a network device, comprising:
a first transmission unit, configured to transmit first Downlink Control Information (DCI) to a user equipment, to schedule repetitions of a target Transport Block (TB);
a first determination unit, configured to determine second DCI, wherein the second DCI is used to indicate the user equipment to determine resources for remaining repetitions of the target TB in accordance with the second DCI and a start time when the second DCI becomes effective;
a second transmission unit, configured to transmit the second DCI to the user equipment; and
a first processing unit, configured to receive or transmit the target TB through the resources for the remaining repetitions determined in accordance with the second DCI.

39. A processor readable storage medium, having a computer program stored thereon, wherein the computer program is executed by a processor so as to implement the information processing method according to any one of claims 1 to 18.
